# FASCICULE DE BREVET EUROPEEN

(11) **EP 1 232 128 B1**
(45) Date de publication et mention de la délivrance du brevet: **24.09.2003**
(21) Numéro de dépôt: 00981417.9
(22) Date de dépôt: 16.11.2000
(51) Int. Cl.: C04B 14/48

(54) **COMPOSITION DE BETON MICROGRANULAIRE A FIBRES DE RENFORT METALLIQUES**
MIKROGRANULÄRE BETONZUSAMMENSETZUNG MIT METALLISCHEN VERSTÄRKUNGSFASERN
MICROGRANULAR CONCRETE COMPOSITION WITH REINFORCING METAL FIBRES

(30) Priorité: 16.11.1999 FR 9914340
(43) Date de publication de la demande: 21.08.2002
(73) Titulaire: HOLCIM (Belgique), 7034 Mons-Obourg (BE)
(72) Inventeur: AITCIN, Pierre-Claude, Sherbrooke, Québec J1J 1M8 (CA); LERAT, André, B-7000 Mons (BE); WEISS, Jean-Claude, F-59880 ST-SAULVE (FR)
(74) Mandataire: Fruchard, Guy
(86) Numéro de dépôt international: FR0003185
(87) Numéro de publication internationale: WO01036343

(56) Documents cités:
- EP-A- 0 032 421
- EP-A- 0 440 523
- EP-A- 0 534 857
- WO-A-95/01316
- CH-A- 646 930
- DE-A- 3 739 997
- DE-A- 4 104 929
- FR-A- 2 640 962

## Description

La présente invention concerne une composition de béton à fibres de renfort métalliques.

On sait que pour renforcer une composition de béton microgranulaire comportant du ciment et des agrégats microgranulaires, notamment pour augmenter la résistance à la traction et éviter les fissures du béton lors de la flexion, il est habituel d'incorporer au béton des fibres métalliques telles que des fibres en acier.

Dans la pratique antérieure il est couramment admis que ces fibres doivent être courtes, de préférence inférieures à 20 mm, voire même inférieures à 5 mm. De telles fibres permettent un malaxage aisé mais ne se recouvrent pas suffisamment entre elles pour assurer une véritable continuité de la reprise d'un effort sur le béton, qu'il s'agisse d'un effort de traction ou de flexion.

Un but de l'invention est de proposer une composition assurant une résistance accrue à la traction et à la flexion tout en pouvant être malaxée dans des conditions suffisantes.

Selon l'invention on propose une composition de béton microgranulaire comprenant du ciment et des agrégats microgranulaires, cette composition comportant en outre 1 p à 80 p de fibres métalliques provenant au moins en partie d'un premier groupe de fibres de longueur comprise entre 20 et 100 mm et de diamètre compris entre 100 et 500µm, et pour le reste d'un second groupe de fibres de longueur comprise entre 1 et 20 mm et de diamètre compris entre 100 et 300 µm.

On a constaté que même lorsque les fibres métalliques proviennent en totalité du premier groupe il est possible de réaliser un malaxage efficace et les fibres métalliques se répartissent dans le béton en assurant un recouvrement sur une longueur égale à plusieurs dizaines de fois le diamètre des fibres ce qui favorise une transmission des efforts dans une barre.

Selon une version avantageuse de l'invention, les fibres proviennent au moins à 15 % du premier groupe. On a ainsi expérimenté que tout en conservant un malaxage très aisé on améliore la résistance d'une barre de façon significative.

Selon le mode de réalisation préféré de l'invention, la composition est réalisée à partir d'un ciment au laitier, c'est-à-dire un ciment comprenant de 20 à 80 % de laitier broyé, de préférence 60 % de laitier broyé, le reste étant du clinker et/ou des activateurs de laitier tels que des composés alcalins, calciques ou organiques, ce ciment au laitier ayant un D50 de 8 µm. Pour 100 parties en poids (p) de ciment au laitier, la composition préférée comporte 30 p de micro-éléments à caractère pouzzolanique ayant une dimension de grains comprise entre 0,1 µm et 0,5 µm. Ces micro-éléments peuvent être des micro-cendres résultant de la récupération des fines dans des éléctrofiltres de centrale thermique, des cendres volantes micronisées, des silices d'origine géothermales ou des fumées de silice ou un mélange de ceux-ci. Les micro-éléments comprennent en outre 30 p de micro-éléments à caractère hydraulique tels que du microlaitier ayant un D 50 de 10 µm et une dimension maximale des grains de 30 µm. La composition préférée comporte en outre 150 p de sable comprenant au moins 60 p de sable de laitier à structure vitreuse ou cristalline, le reste étant du sable de quartz, ce sable ayant un D50 de 250 µm et une dimension maximale des grains de 600 µm. Afin d'augmenter la résistance à la traction du béton tout en permettant un malaxage rapide on prévoit en outre d'incorporer 20 p de fibres métalliques obtenues par tréfilage d'un acier pour réaliser des fils de 160 µm de diamètre qui sont découpés selon des segments ayant une longueur de 28 mm. Si nécessaire la composition comporte encore 1 p à 15 p de fibres organiques qui améliorent la tenue au feu du béton.

Lors du malaxage du béton, par exemple dans un malaxeur à cuve déformable, 10 p à 40 p, de préférence 20 p, d'eau sont ajoutées, une partie de cette eau ayant servi à diluer 2 p de fluidifiant sous forme d'extrait sec tel que par exemple un polynaphtalène sulfonate ou tout autre fluidifiant approprié.

Pour tenir compte de la contraction volumétrique des hydrates produits, le béton obtenu peut être pressé pour minimiser la porosité interne et soumis à un traitement thermique accélérant la prise et le durcissement du béton. On notera à ce propos que la composition selon l'invention permet une montée en température plus rapide que les compositions au ciment Portland.

Bien entendu, l'invention n'est pas limitée au mode de réalisation particulier décrit et est susceptible de variantes de réalisation qui apparaîtront à l'homme de métier sans sortir du cadre de l'invention tel que défini par les revendications.

En particulier, bien que l'invention ait été décrite en relation avec un exemple de composition de béton, elle s'applique à toute composition de béton microgranulaire.

En outre, on sait que les fibres ont pour fonction de modifier la distribution du champ des forces aux endroits où l'ouvrage réalisé en béton présente des amorces de fissure. En fonction de la configuration de l'ouvrage et des efforts auxquels celui-ci sera soumis, il sera donc possible de faire varier la nature, la quantité ou les dimensions des fibres utilisées, par exemple inclure 1 p à 80 p de fibres métalliques, celles-ci provenant de préférence à raison d'au moins 15 % en volume d'un premier groupe de fibres de longueur comprise entre 20 et 40 mm, voire entre 20 et 100 mm et un diamètre compris entre 200 et 300 µm, voire même entre 100 et 500 µm, et provenant pour le reste d'un second groupe de fibres de longueur comprise entre 1 et 20 mm et un diamètre compris entre 100 et 300 µm, de préférence 260 µm, la quantité totale de fibres métalliques étant telle que pour une coupe du béton solidifié selon une direction quelconque, le nombre moyen de fibres coupées est inférieur ou au plus égal à une fibre par millimètre carré. A ce propos on notera que pour des fibres de diamètre donné le volume total des fibres doit être d'autant plus faible que celles-ci sont plus longues.

On pourra donc adapter la proportion de fibres longues, une grande proportion des fibres les plus longues assurant une meilleure résistance de l'ouvrage mais au prix d'une augmentation des contraintes de malaxage. On pourra également faire varier le diamètre des fibres, les fibres plus fines étant d'un coût unitaire plus élevé à égalité de longueur mais ayant de meilleures performances, ce qui permet de diminuer le volume nécessaire et d'obtenir ainsi un coût sensiblement équivalent.

## Revendications

1. Composition de béton microgranulaire comprenant du ciment et des agrégats microgranulaires, **caractérisée en ce que** pour 100 p en poids de ciment elle comporte en outre 1 p à 80 p de fibres métalliques provenant au moins en partie d'un premier groupe de fibres de longueur comprise entre 20 et 100 mm et de diamètre compris entre 100 et 500µm, et pour le reste d'un second groupe de fibres de longueur comprise entre 1 et 20 mm et de diamètre compris entre 100 et 300 µm.

2. Composition selon la revendication 1, **caractérisée en ce que** la quantité totale de fibres métalliques est telle que pour une coupe du béton solidifié selon une direction quelconque, le nombre moyen de fibres coupées est inférieur ou au plus égal à une fibre par millimètre carré.

3. Composition selon l'une des revendications 1 à 3, **caractérisée en ce que** les fibres du premier groupe ont un diamètre compris entre 100 et 250 µm.

4. Composition selon l'une des revendications 1 à 3, **caractérisée en ce que** les fibres du premier groupe ont une longueur de 28 mm pour des fibres ayant un diamètre de 160 µm.

5. Composition selon l'une quelconque des revendications précédentes, **caractérisée en ce que** les fibres du premier groupe ont un diamètre compris entre 200 et 300 µm.

6. Composition selon l'une quelconque des revendications précédentes, **caractérisée en ce que** les fibres du second groupe ont un diamètre de 260 µm.

7. Composition selon l'une quelconque des revendications précédentes, **caractérisée en ce qu'**elle comprend 10 p à 30 p de fibres métalliques.

8. Composition selon l'une quelconque des revendications précédentes, **caractérisée en ce que** les fibres proviennent au moins à 15 % du premier groupe.

9. Composition selon l'une quelconque des revendications précédentes, **caractérisée en ce qu'**elle comporte en outre 1 p à 15 p de fibres organiques.

## Claims

1. A microgranular concrete composition comprising cement and microgranular aggregate, **characterized in that** for 100 parts by weight of cement it further comprises 1 part to 80 parts metal fibers coming at least in part from a first group of fibers of length lying in the range 20 mm to 100 mm and of diameter lying in the range 100 µm to 500 µm, with the remainder coming from a second group of fibers of length lying in the range 1 mm to 20 mm and of diameter lying in the range 100 µm to 300 µm.

2. A composition according to claim 1, **characterized in that** the total quantity of metal fibers is such that for a section in any direction through the solidified concrete, the mean number of cut fibers is less than or not greater than one fiber per square millimeter.

3. A composition according to any one of claims 1 to 3, **characterized in that** the fibers of the first group are of diameter lying in the range 100 µm to 250 µm.

4. A composition according to any one of claims 1 to 3, **characterized in that** the fibers of the first group have a length of 28 mm for fibers having a diameter of 160 µm.

5. A composition according to any preceding claim, **characterized in that** the fibers of the first group are of diameter lying in the range 200 µm to 300 µm.

6. A composition according to any preceding claim, **characterized in that** the fibers of the second group have a diameter of 260 µm.

7. A composition according to any preceding claim, **characterized in that** it comprises 10 parts to 30 parts metal fibers.

8. A composition according to any preceding claim, **characterized in that** at least 50% of the fibers come from the first group.

9. A composition according to any preceding claim, **characterized in that** it further comprises 1 part to 15 parts organic fibers.

## Patentansprüche

1. Mikrogranuläre Betonzusammensetzung, umfassend Zement und mikrogranuläre Zuschlagstoffe, **dadurch gekennzeichnet, daß** die Zusammensetzung auf 100 Gewichtsteile Zement gerechnet ferner 1 bis 80 Teile Metallfasern enthält, die zumindest teilweise zu einer ersten Gruppe von Fasern gehören, deren Länge zwischen 20 und 100 mm und deren Durchmesser zwischen 100 und 500 µm liegt, wobei die übrigen Metallfasern zu einer zweiten Gruppe von Fasern gehören, deren Länge zwischen 1 und 20 mm und deren Durchmesser zwischen 100 und 300 µm liegt.

2. Zusammensetzung nach Anspruch 1, **dadurch gekennzeichnet, daß** die Gesamtanzahl der Fasern derart ist, daß die Anzahl der geschnittenen Fasern bei einem Schnitt des ausgehärteten Betons entlang irgendeiner Richtung geringer oder höchstens gleich einer Faser pro Quadratmillimeter ist.

3. Zusammensetzung nach einer der Ansprüche 1 bis 3, **dadurch gekennzeichnet, daß** der Durchmesser der Fasern der ersten Gruppe zwischen 100 und 250 µm liegt.

4. Zusammensetzung nach einem der Ansprüche 1 bis 3, **dadurch gekennzeichnet, daß** die Länge der Fasern der ersten Gruppe für die Fasern mit einem Durchmesser von 160 µm 28 mm beträgt.

5. Zusammensetzung nach einem der vorhergehenden Ansprüche, **dadurch gekennzeichnet, daß** der Durchmesser der Fasern der ersten Gruppe zwischen 200 und 300 µm liegt.

6. Zusammensetzung nach einem der vorhergehenden Ansprüche, **dadurch gekennzeichnet, daß** der Durchmesser der Fasern der zweiten Gruppe 260 µm beträgt.

7. Zusammensetzung nach einem der vorhergehenden Ansprüche, **dadurch gekennzeichnet, daß** sie zwischen 10 und 30 Teile Metallfasern enthält.

8. Zusammensetzung nach einem der vorhergehenden Ansprüche, **dadurch gekennzeichnet, daß** die Fasern zumindest zu 15 % zur ersten Gruppe gehören.

9. Zusammensetzung nach einem der vorhergehenden Ansprüche, **dadurch gekennzeichnet, daß** sie ferner zwischen 1 und 15 Teile organische Fasern enthält.
